# EUROPÄISCHE PATENTSCHRIFT

(11) **EP 3 235 380 B1**
(45) Veröffentlichungstag und Bekanntmachung des Hinweises auf die Patenterteilung: **03.03.2021**
(21) Anmeldenummer: 17401036.3
(22) Anmeldetag: 31.03.2017
(51) Int. Cl.: A01M 7/00

(54) **FELDSPRITZE**
AGRICULTURAL SPRAYER
PULVÉRISATEUR AGRICOLE

(30) Priorität: 12.04.2016 DE 102016106652
(43) Veröffentlichungstag der Anmeldung: 25.10.2017
(73) Patentinhaber: Amazonen-Werke H. Dreyer GmbH & Co. KG, 49205 Hasbergen (DE)
(72) Erfinder: Heitmeyer, Kilian, 49152 Bad Essen (DE)

(56) Entgegenhaltungen:
- EP-A1- 0 623 280
- EP-A1- 1 188 375
- DE-U1-202006 010 074

## Beschreibung

Die Erfindung betrifft ein Verfahren sowie eine Vorrichtung zur Steuerung der Flüssigkeitsbeförderung einer landwirtschaftlichen Feldspritze mit einem Einspülbehälter zur Dosierung eines Wirkstoffes in einen Wirkstofftank.

Einspülbehälter zum Einspülen eines Wirkstoffes oder Wirkstoffkonzentrats in einen Vorratsbehälter zur Herstellung einer Spritzbrühe sind seit geraumer Zeit Stand der Technik. So offenbart beispielsweise die EP 1 188 375 eine Feldspritze zum Ausbringen eines Spritzmittels, welche über eine Einspülvorrichtung in Form eines Einspülbehälters verfügt, wobei der Einspülbehälter in eine Transportposition und eine Einspülposition bewegbar ist. Die Bewegung des Einspülbehälters von der Transport- in die Einspülposition bewirkt hierbei eine Änderung der Konfiguration des Flüssigkeitskreises derart, dass eine Betriebsart "Einspülen" aktiviert wird. Ebenso ist vorgesehen, dass durch Bewegen des Einspülbehälters in die Transportposition die Funktionalität "Einspülen" außer Kraft gesetzt wird.

Die EP 0 623 280 offenbart eine Steuervorrichtung für eine landwirtschaftliche Feldspritze, mittels welcher verschiedene Funktionalitäten der Feldspritze beispielsweise das Füllen des Spritzbehälters oder das Einbringen des Wirkstoffes vereinfacht werden, indem Sensoren zur Detektion von Betriebszuständen ausgelesen und diese mit gespeicherten Sollwerten verglichen und jeweils dem Nutzer angezeigt werden, um den jeweiligen Zustand der Feldspritze beurteilen zu können. Zudem ist in dieser Schrift offenbart, mittels der Steuervorrichtung Komponenten des Flüssigkeitskreislaufes, beispielsweise Motoren oder Ventile entsprechend vorgesehener Arbeitsvorgänge zu Steuern.

Nachteile des Standes der Technik betreffen insbesondere die möglichst einfache und komfortable Durchführung des Befüllvorganges der Feldspritze mit Klarwasser bzw. gemischter Spritzbrühe.

Aufgabe der vorliegenden Erfindung ist es daher in möglichst einfacher und komfortabler Weise eine Befüllung eines Vorratsbehälters für Spritzbrühe einer Feldspritze zu ermöglichen.

Dieses wird in erfindungsgemäßer Weise entsprechend dem kennzeichnenden Teil des Anspruchs 1 erreicht, indem in Reaktion auf das Sensorsignal eines Sensors, welcher die Lage einer Einspülschleuse detektiert die Befüllung des Vorratsbehälters der Feldspritze gesteuert wird. Hierdurch wird eine Überforderung des Nutzers bei der gleichzeitigen Überwachung des Einspül- und Befüllvorganges verhindert und/oder eine Zeitersparnis durch das gleichzeitige Befüllen und Einspülen des Wirkstoffes gegenüber dem nacheinander Ausführen dieser Tätigkeiten erreicht. Hierbei sind die beiden Vorgänge des Einspülens und Befüllens der Feldspritze zu unterscheiden. Das Befüllen der Feldspritze bezeichnet den Vorgang des Befüllens der Feldspritze mit einer großen Menge an Trägerflüssigkeit, typischerweise können dies mehrere tausend Liter einer Trägerflüssigkeit, beispielsweise Klarwasser, sein. Das Einspülen wiederum bezeichnet die Tätigkeit des Mischens einer Menge eines Wirkstoffkonzentrats, typischerweise einige Liter, in die Trägerflüssigkeit. Das Einspülen kann mittels eines sogenannten Einspülbehälters vorgenommen werden. Bei dieser Tätigkeit wird das Wirkstoffkonzentrat in einen leicht zugänglichen Behälter der Feldspritze eingefüllt. Dieser wird normalerweise mittels eines Leitungssystems von der Trägerflüssigkeit durchströmt, welches eine einfache und zuverlässige Durchmischung von Trägerflüssigkeit und Wirkstoffkonzentrat ermöglicht.

Die Position der Einspülschleuse kann hierbei nicht nur direkt durch einen Lagesensor an dem Einspülbehälter sondern auch in erfindungsgemäßer Weise indirekt detektiert werden. Beispielsweise kann ein Sensor am Deckel des Einspülbehälters angebracht sein. Dieser erfasst das Öffnen oder Schließen des Deckels des Einspülbehälters. Ein geöffneter Deckel des Einspülbehälters indiziert hierbei, dass dieser vorher heruntergeklappt wurde. Eine alternative Möglichkeit das Herunterklappen des Einspülbehälters indirekt zu detektieren, ist es einen Sensor an einer den Einspülbehälter abdeckenden Haube anzubringen. Diese muss aufgeklappt werden, bevor ein Einspülvorgang eingeleitet werden kann. In gleicher Weise muss die Einspülschleuse hochgeklappt sein, bevor eine entsprechende Haube geschlossen werden kann. Ein Sensor an der Haube, welcher das Auf- oder Zuklappen der Haube detektiert, kann somit in erfindungsgemäßer Weise indirekt auch das Herunterklappen oder Hochklappen der Einspülschleuse detektieren. Als weitere Möglichkeit könnte das Anschließen eines oder mehrerer Schläuche zur Befüllung des Vorratsbehälters detektiert und hierdurch indirekt auf die Position des Einspülbehälters geschlossen werden.

In einer vorteilhaften Weiterbildung der Erfindung wird die Befüllung des Vorratsbehälters ebenfalls in Reaktion auf das Signal eines zweiten Sensors, der den Füllstand des Vorratsbehälters bestimmt, gesteuert. Das Berücksichtigen dieses Sensorsignals während des Befüllvorganges führt zu einer weiteren Arbeitserleichterung für das Bedienpersonal, da der derzeitige Füllstand automatisch überwacht wird.

In einer vorteilhaften Weiterbildung der Erfindung wird zudem die Befüllung eines Klarwasserbehälters ebenfalls in Reaktion auf das Signal des oben genannten Sensors sowie eines Füllstandssignals eines dritten Sensors gesteuert. Durch diese Funktionalität wird eine zusätzliche Arbeitserleichterung und Zeitersparnis erreicht.

In einer vorteilhaften Weiterbildung der Erfindung wird mittels des Sensorsignals zur Detektion der Einspülbehälterposition automatisiert ein Reinigungsvorgang zur Reinigung des Einspülbehälters durch die Steuereinheit aktiviert, sobald nach dem Einspülen von Wirkstoffmitteln in den Vorratsbehälter in der heruntergeklappten Position durch den Sensor eine angehobene Stellung, vorzugsweise die hochgeklappte Transportposition, detektiert wird. Hierdurch kann eine weitere Funktion, nämlich das notwendige Reinigen des Einspülbehälters in automatisierter Art und Weise durchgeführt werden, so dass diese obligatorische Funktion nicht extra durch das Bedienpersonal angewählt werden muss.

In einer möglichen Ausgestaltung der Erfindung wird bei Vorliegen eines Befüllvorganges des Vorratsbehälters und/oder des Klarwasserbehälters mit einer Flüssigkeit bis zu einem vorgewählten ersten Wert für den Füllstand eine Steuerfunktion aktiviert, welche den Befüllvorgang stoppt, sobald der Füllstand in dem Vorratsbehälter und/oder dem Klarwasserbehälter den ersten Wert erreicht hat. Auf diese Weise kann vorteilhaft der Befüllvorgang automatisiert unterbrochen oder gestoppt werden, wenn ein vorher festgelegter Flüssigkeitspegel erreicht wird.

In einer vorteilhaften Weiterbildung der Erfindung wird bei Vorliegen eines Befüllvorganges des Vorratsbehälters und/oder Klarwasserbehälters mit einer Flüssigkeit bis zu einem vorgewählten ersten Wert für den Füllstand eine Steuerfunktion aktiviert wird, sobald der zumindest eine erste Sensor eine heruntergeklappte Stellung des Einspülbehälters detektiert, wobei die Steuerfunktion das weitere Befüllen des Vorratsbehälters mit Flüssigkeit verhindert, sobald der Füllstand in dem Vorratsbehälter einen zweiten zuvor festgelegten Wert erreicht hat, welcher niedriger ist, als der erste Wert des Füllstandes. Auf diese Weise kann vorteilhaft eine Wechselwirkung zwischen den beiden Vorgängen "Befüllen" und "Einspülen" hergestellt werden, da die Flüssigkeit, mit welcher der Vorratsbehälter und/oder Klarwasserbehälter befüllt wird, während des Befüllvorganges gleichzeitig zum Einspülen des Wirkstoffes verwendet wird. Daher wäre es unvorteilhaft, wenn der Befüllvorgang abgeschlossen wäre, bevor die vorgesehene Menge des Wirkstoffes mittels der Einspülschleuse fertig eingespült worden wäre. Deswegen wird der Befüllvorgang gestoppt, wenn ein bestimmter Flüssigkeitspegel in dem Vorrats-/ und/oder Klarwasserbehälter erreicht ist und der Einspülvorgang noch nicht abgeschlossen worden ist, die Einspülschleuse also noch heruntergeklappt ist. Dies wird durch den ersten Sensor zu Bestimmung der Position der Einspülschleuse bestimmt. Hierfür werden im Vorfeld zwei Füllstandwerte für jeden der vorhandenen Behälter definiert: Ein erster Wert, welcher dem endgültigen Füllstand entspricht und ein zweiter Wert, welcher einem vorläufigen Wert entspricht, welcher niedriger ist, als der erste Wert und bei dessen Erreichen oder Überschreiten bei gleichzeitigem Vorliegen einer heruntergeklappten Position der Einspülschleuse der Befüllvorgang vorläufig unterbrochen wird.

In einer vorteilhaften Weiterbildung wird das weitere Befüllen des Vorratsbehälters und/oder Klarwasserbehälters bis zu einem ersten Wert für den Füllstand aktiviert, sobald der zumindest eine erste Sensor eine angehobene Stellung, vorzugsweise die hochgeklappte Transportposition, detektiert. Auf diese Weise kann vorteilhaft der Befüllvorgang fortgesetzt werden, wenn der Einspülvorgang offensichtlich abgeschlossen ist. Dies wird detektiert durch eine hochgeklappte Position des Einspülbehälters, beispielsweise die Transportposition.

In einer vorteilhaften Ausgestaltung der Erfindung ist eine Bedien- und/oder Anzeigevorrichtung, vorzugsweise angebracht in einer Fahrerkabine, mit der Steuereinheit verbunden und in der Bedien- und/oder Anzeigevorrichtung und/oder der Steuervorrichtung sind Daten für zumindest eine landwirtschaftliche Fläche hinterlegt, welche die Flächengröße und/oder den auszubringenden Wirkstoff und/oder die auszubringende Wirkstoffmenge und/oder die auszubringende Wirkstoffmengenkonzentration umfassen, und es ist die zumindest eine Fläche mittels der Bedien- und/oder Anzeigevorrichtung auswählbar und in Reaktion darauf wird die Flüssigkeitsbeförderung gesteuert. Auf diese Weise kann vorteilhaft das Befüllen der Maschine über gespeicherte Daten erleichtert werden, da die benötigten Daten für das Bedienpersonal abrufbar sind.

In einer möglichen Weiterbildung der Erfindung sind zu der zumindest einen hinterlegten Fläche jeweils zusätzlich Positionsdaten hinterlegt und ein Positionsbestimmungssensor ist mit der Steuereinheit und/oder der Bedien- und/oder Anzeigevorrichtung verbunden und der aktuellen Position des Positionsbestimmungssensors wird automatisch durch die Steuervorrichtung oder die Bedien- und/oder Anzeigevorrichtung die nächstliegende Fläche zugeordnet. Auf diese Weise sind die wesentlichen Informationen der nächstliegenden Fläche für das Bedienpersonal in automatisierter Weise und damit besonders komfortabel abrufbar.

In einer vorteilhaften Ausgestaltung der Erfindung werden der erste und/oder der zweite Wert für den Füllstand des Vorratsbehälters und/oder des Klarwasserbehälters automatisch durch die Steuervorrichtung und/oder die Bedien- und/oder Anzeigevorrichtung an Hand der gespeicherten Daten ermittelt. Somit kann mittels der Daten des Positionsbestimmungssensors automatisiert und damit besonders Nutzerfreundlich die für die Befüllung erforderlichen Füllstände automatisiert ermittelt werden. Dies kann einerseits anhand vorhandener, gespeicherte Füllstandswerte erfolgen. Es kann aber auch automatisiert aus den Flächengrößen der zu bearbeitenden Flächen die notwendige Flüssigkeitsmenge und damit der Füllstand errechnet werden, um den ersten Füllstandswert zu ermitteln. Der zweite Wert kann dann über eine vorher festgelegte Differenz zum ersten Wert, beispielsweise - 500 l, oder einen vorher festgelegten Anteil, beispielweise 80 % vom ersten Wert, automatisiert festgelegt werden.

Positionsbestimmungssensoren im Sinne der Erfindung sind alle Arten von Sensoren, die geeignet sind, die Position der Feldspritze zu erfassen. Dies können GPS-Empfänger sein oder Kameras zur Detektion der Umgebung der Feldspritze oder auch RFID-Empfänger oder Bluetooth-Low-Energy-Empfänger (BLE-Empfänger), welche das Signal eines an oder in der Nähe eine landwirtschaftlichen Fläche und/oder an einer Befüllstation angebrachten RFID-Senders oder BLE-Senders empfangen und hierdurch die Position der Feldspritze detektieren.

In einer vorteilhaften Weiterbildung der Erfindung wird die Quelle der für den Einspülvorgang notwendigen Trägerflüssigkeit, vorzugsweise der Vorratsbehälter und/oder der Klarwasserbehälter, durch die Steuervorrichtung und/oder die Bedien- und/oder Anzeigevorrichtung an Hand der gespeicherten Daten ausgewählt. Auf diese Weise kann eine weitere Erleichterung des Einspülvorganges erreicht. Als Quellen für den Einspülvorgang können zum einen einer oder mehrere der an der Feldspritze vorhandenen Tanks dienen. Es kann aber auch vorgesehen sein automatisiert über einen Anschluss der Pumpe Trägerflüssigkeit aus einer externen Quelle, wie beispielsweise einem stationären Tank oder einem Hydranten, zu beziehen.

Ein unabhängiger Anspruch betrifft eine Vorrichtung zur Steuerung der Flüssigkeitsbeförderung einer landwirtschaftlichen Feldspritze, welche in Reaktion auf das Sensorsignal eines Sensors, welcher die Lage einer Einspülschleuse detektiert, die Befüllung des Vorratsbehälters Feldspritze steuert. Hierdurch wird mit der erfindungsgemäßen Vorrichtung eine Überforderung des Nutzers bei der gleichzeitigen Überwachung des Einspül- und Befüllvorganges verhindert und/oder eine Zeitersparnis durch das gleichzeitige Befüllen und Einspülen des Wirkstoffes gegenüber dem nacheinander Ausführen dieser Tätigkeiten erreicht.

Andere vorteilhafte Ausgestaltungen und weitere Einzelheiten der Erfindung sind den weiteren Unteransprüchen sowie Beispielsbeschreibung und den Zeichnungen zu entnehmen. Hierbei zeigt
Fig. 1 eine Feldspritze mit klappbarem Einspülbehälter in hochgeklapptem Zustand,
Fig. 2 den Einspülbehälter nach Fig. 1 in vergrößerter Darstellung,
Fig. 3 eine Feldspritze mit klappbarem Einspülbehälter in heruntergeklappter Stellung
Fig. 4 den Einspülbehälter nach Fig. 3 in vergrößerter Darstellung und
Fig. 5 den Brühekreislauf der Feldspritze.

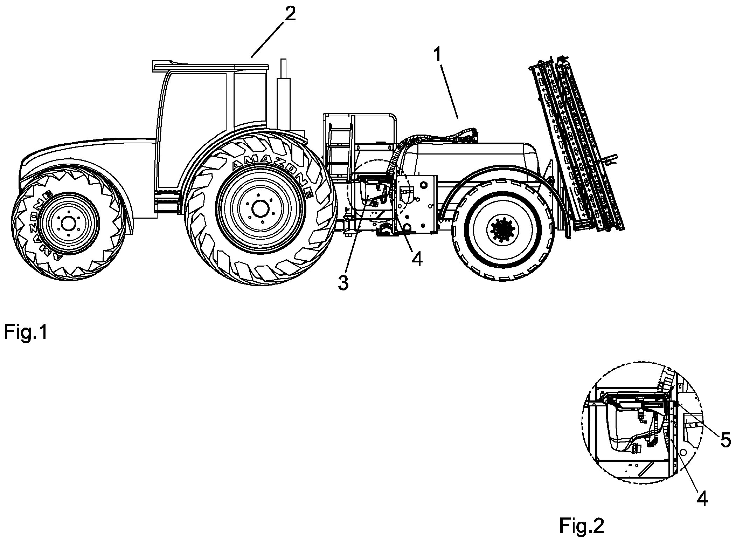

Fig. 1 zeigt eine Feldspritze 1 angehängt an einen Traktor 2, wobei die Feldspritze über einen klappbaren Einspülbehälter 3 verfügt. Der Einspülbehälter 3 ist hierbei in hochgeklappter Transportposition dargestellt. Das Klappen wird durch eine Gelenkmimik 4 an der Feldspritze 1 ermöglicht, welche in der Fig. 2 in vergrößerter Darstellung zu sehen ist. Um die Position des Einspülbehälters 3 automatisiert bestimmen zu können, ist zudem ein Sensor 5 an der Gelenkmimik 4 angeordnet. Es kann sich hierbei um einen beliebigen Sensor handeln, der geeignet ist, die Einspülbehälterposition zu bestimmen. Beispielsweise kann hierfür ein Taster und/oder Drehwinkelsensor und/oder Neigungssensor verwendet werden. Auch ist es beispielsweise denkbar einen Sensor an der Feldspritze oder an dem Einspülbehälter selbst vorzusehen, welcher die Position desselben detektiert. Dies könnte beispielsweise ein optischer Sensor sein.

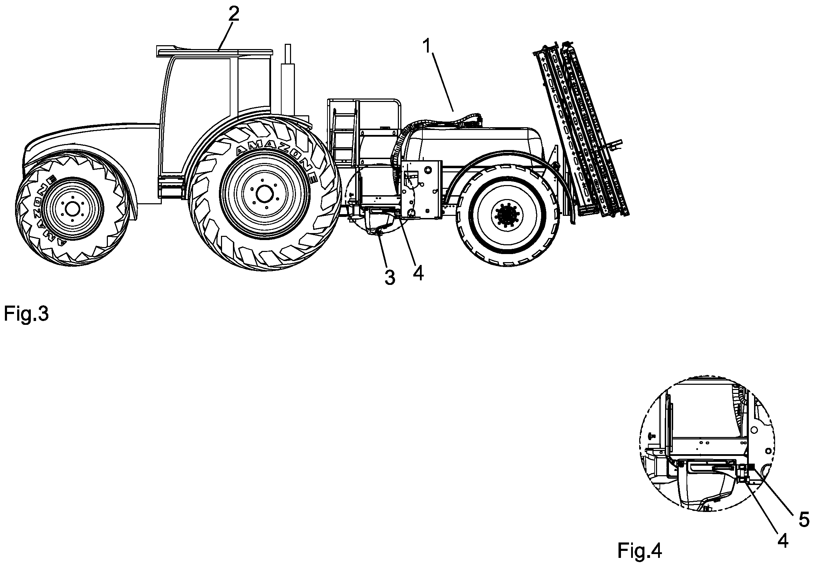

In der Fig. 3 ist nun der Einspülbehälter 3 in heruntergeklappter Einspülposition mit hochgeklapptem Deckel dargestellt. In dieser Position kann die Bedienperson das auszubringende Spritzmittelkonzentrat in den Einspülbehälter einfüllen, welches anschließend über den Flüssigkeitskreislauf der Feldspritze abgesaugt wird. Die heruntergeklappte Einspülposition des Einspülbehälters 3 wird, wie in Fig. 4 dargestellt, in diesem Ausführungsbeispiel mittels des Sensors 5, welcher an der Gelenkmimik 4 angebracht ist, detektiert. Mittels der Detektion der Einspülpositon des Einspülbehälters können nun in einem Steuergerät der Feldspritze automatisiert Funktionen der Steuerung des Flüssigkeitskreislaufes der Feldspritze aufgerufen werden, welche im weiteren Verlauf noch näher beschrieben werden.

Nachdem der Einspülvorgang abgeschlossen ist, wird der Einspülbehälter wieder in die hochgeklappte Transportposition entsprechend Fig. 1 und 2 verbracht. Dieses Hochklappen kann wiederum mit dem Sensor 5 detektiert werden und es können wiederum automatisiert Funktionen der Feldspritze hierdurch aktiviert werden. Beispielsweise kann ein automatisierter Reinigungsvorgang des Einspülbehälters aufgerufen werden.

Auch ist denkbar dass die Feldspritze mit einer klappbaren Haube versehen ist, welche heruntergeklappt werden kann, wenn sich der Einspülbehälter in Transportposition befindet, so dass dieser von der Haube schützend verdeckt wird. Es entspricht dem Geist der Erfindung, dass die Transportposition des Einspülbehälters auch mittels eines an der Haube angebrachten Sensors bestimmt werden kann.

Ebenso ist es möglich einen Sensor am Deckel des Einspülbehälters vorzusehen und über die Deckelposition, also die geöffnete oder geschlossene Position, festzustellen ob sich der Einspülbehälter in Einspülstellung befindet oder nicht.

Weiter ist es denkbar eine auslesbare Schlauchkupplung vorzusehen, so dass das An- oder Abkoppeln eines Schlauches detektiert und hierdurch auf den Zustand der Einspülschleuse zurückgeschlossen werden kann.

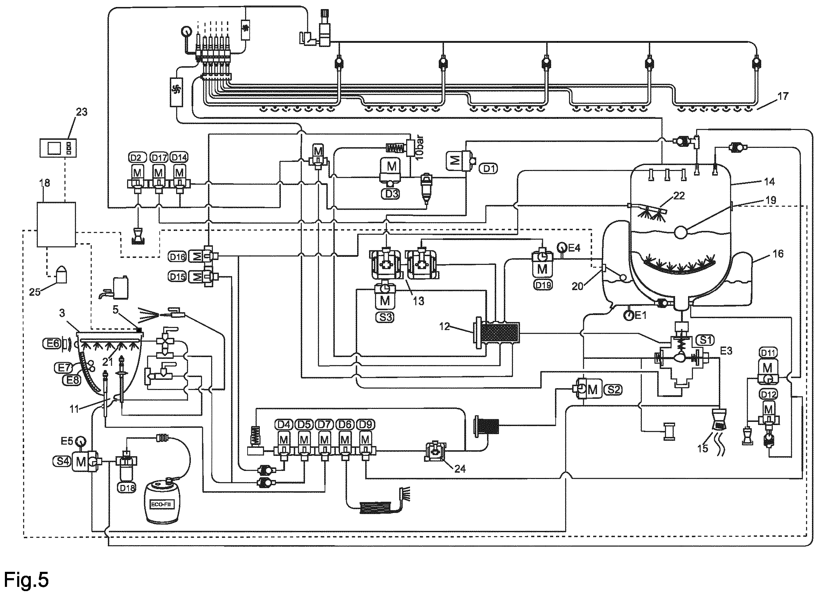

Figur 5 zeigt den Brühekreislauf einer Feldspritze mit einem Einspülbehälter 3 zum Einspülen eines Spritzmittelkonzentrats. Das Spritzmittel wird in den Behälter gegeben und über den Ablauf 11 abgesaugt. Es passiert den Filter 12 und erreicht die Pumpen 13 mittels welcher es dann in den Spritzbrühebehälter 14 gefördert wird. Je nachdem ob der Spritzbrühebehälter bereits mit der ausreichenden Menge an Trägerflüssigkeit, vorzugsweise Klarwasser, befüllt ist, kann gegebenenfalls gleichzeitig über den Sauganschluss 15 ein Befüllen des Spritzbrühebehälters 14 mit Klarwasser vorgenommen werden. Zudem ist es möglich ein Anmischen der Spritzbrühe mittels des sich in dem Klarwasserbehälter 16 befindlichen Wassers vorzunehmen statt den Sauganschluss 15 zu verwenden. Der Einspülbehälter verfügt zudem über Düsen 21 zum Reinigen des Einspülbehälters im Anschluss an den Einspülenvorgang.

Das Ausbringen der fertig angemischten Spritzbrühe erfolgt auf dem Feld mittels der einzelnen Düsen 17 in bekannter und hier nicht näher beschriebene Art und Weise.

Das System verfügt zudem über eine Steuereinheit 18 zur Steuerung des Befüll- und Ausbringvorgangs. Hierzu ist die Steuereinheit 18 verbunden mit dem Lagesensor 5 zur Detektion der Einspülbehälterposition sowie einem Füllstandssensor 19 zur Detektion des Füllstands im Vorratsbehälter 14 und einem Füllstandssensor 20 zur Detektion des Füllstands im Klarwasserbehälter 16.

Soll nun das Anmischen einer Spritzbrühe vorgenommen werden, so wird bei dem in Fig. 5 gezeigten Ausführungsbeispiel der Steuereinheit 18 durch den Sensor 5 ein Herunterklappen des Einspülbehälters übermittelt. Des Weiteren wird jederzeit der aktuelle Füllstand der Behälter 14 und 16 durch die Sensoren 19 und 20 ermittelt und der jeweilige Wert an die Steuereinheit 18 gemeldet. Je nach Größe der zu behandelnden landwirtschaftlichen Fläche variiert die Menge an benötigter Spritzbrühe und damit die Menge an Trägerflüssigkeit und Spritzmittelkonzentrat, welche benötigt werden. Der jeweilige Ablauf des Befüllvorganges kann hierbei in der Form von Profilen in der Steuereinheit hinterlegt sein. Diese können durch das Herunterklappen des Einspülbehälters 3 aktiviert werden. Bei mehreren hinterlegten Profilen kann vorzugsweise dasjenige vorausgewählt sein, welches am häufigsten Verwendung findet.

Auch ist denkbar mittels eines geeigneten Bedienterminals 23 eine Auswahl der hinterlegten Profile zu treffen. Hierbei kann die Menüführung des Bedienterminals 23 in vorteilhafter Weise dadurch vereinfacht werden, dass ein Herunterklappen des Einspülbehälters 3 eine Funktionalität des Bedienterminals derart aktiviert, dass das gewünschte Befüllprofil aus einer Auswahl an hinterlegten Befüllprofilen sofort ausgewählt werden kann.

Weiter ist vorgesehen, dass die Steuereinheit 18 mit einem Positionsbestimmungssensor 25, beispielsweise einem GPS-Empfänger, verbunden ist und dass die Befüllprofile zusammen mit der Information gespeichert werden, für die Bearbeitung welcher landwirtschaftlichen Fläche die nach dem jeweiligen Profil befüllte Spritze vorgesehen ist. Dieses ermöglicht eine automatisierte Auswahl des jeweiligen Befüllprofils durch die Steuereinheit 18 bei herunter geklapptem Einspülbehälter mittels der Positionsinformation, welche durch den Sensor 25 bereitgestellt wird. Hierfür wird die derzeitige Position mit den zu den Befüllprofilen hinterlegten Positionsinformationen der jeweiligen landwirtschaftlichen Flächen verglichen und dasjenige Befüllprofil ausgewählt dessen zugeordnete Positionsinformation der derzeitigen Position am nächsten kommt.

Bei gleichzeitigem Einbringen des Spritzmittelkonzentrats und der Trägerflüssigkeit kann das Konzentrat in vorteilhafter Weise bereits im Einspülbehälter mittels der Trägerflüssigkeit verdünnt und so vereinfacht eingespült werden. Hierzu wird über die Steuereinheit 18 der Brühekreislauf in nichtdargestellter Weise derart gesteuert, dass ein Teil der Trägerflüssigkeit. welche beispielsweise über den Sauganschluss 15 angesaugt wird, in den Einspülbehälter 3 geleitet und dort beispielsweise mittels der Düsen 21 eingebracht wird. Somit kann in vorteilhafter Weise eine Vorverdünnung des Spritzmittelkonzentrats stattfinden. Zudem wir bei gleichzeitigem Einbringen der Trägerflüssigkeit in den Tank die sich dort befindliche Menge an Spritzmittelkonzentrat durch die fortwährende Bewegung der Spritzbrühe durch das Einbringen der Trägerflüssigkeit beispielsweise mittels der Düsen bereits effektiv verdünnt.

Um diesen Prozess zu optimieren ist vorgesehen, dass in der Steuereinheit 18 sowohl ein erster als auch ein zweiter Wert für den Füllstand des Vorratsbehälters 14 und/oder des Klarwasserbehälters 16 definiert sind. Der erste Wert gibt hierbei die endgültige Menge an Spritzbrühe an, welche für die Behandlung der zu bearbeitenden landwirtschaftlichen Fläche benötigt wird. Der zweite Wert, welcher niedriger ist als der erste gibt an bis zu welchem Füllstand jeweils bei herunter geklapptem Einspülbehälter gefüllt werden soll. Diese Funktionalität bewirkt, dass auch nach dem Einbringen des Spritzmittelkonzentrats noch Trägerflüssigkeit in den Vorratsbehälter 14 eingebracht wird, was zu einer besseren Durchmischung der Spritzbrühe und im Regelfall einem Spülen zumindest eines Teils der Leitung führt mittels welcher das Konzentrat in den Vorratsbehälter gebracht wurde. Der erste und der zweite Wert für die beiden Behälter werden sich hierbei jeweils im Regelfall unterscheiden. Nach dem Hochklappen des Einspülbehälters 3 wird durch die Steuereinheit das weitere Befüllen des Vorratsbehälters und/oder des Klarwasserbehälters ermöglicht. Auch ist denkbar, dass der Befüllvorgang durch einen Tastendruck an der Bedieneinheit 23 manuell fortgeführt werden kann, obwohl der Einspülvorgang noch nicht abgeschlossen, die Einspülschleuse also noch heruntergeklappt ist.

Nach dem Beenden des Einspülvorgangs wird in der Regel der Einspülbehälter 3 von Resten des Spritzmittelkonzentrats gereinigt. Hierfür befinden sich in dem Einspülbehälter 3 Reinigungsdüsen 21. In vorteilhafter Weise kann dieser Reinigungsvorgang automatisiert werden, indem ein festgelegtes Reinigungsprogramm durch die Steuereinheit 18 durchgeführt wird sobald diese mittels des Sensors 5 eine hochgeklappte Position des Einspülbehälters 3 detektiert. Hierfür wird in der Regel Flüssigkeit aus dem Klarwasserbehälter 16 mittels der Pumpe 24 abgebpumpt.

In einer alternativen Ausgestaltung der Erfindung wird die Einspülposition des Einspülbehälters nicht über dessen Position, sondern über die Position eines an dem Einspülbehälter befindlichen Deckels detektiert, welcher typischerweise in der Einspülposition aufgeklappt sein muss und in der Transportposition zugeklappt sein kann.

Alternativ oder zusätzlich kann die Einspülposition des Einspülbehälters auch mittels eines Sensors zur Detektion einer Haubenposition ermittelt werden, wobei die Haube vorzugsweise in Transportstellung des Einspülbehälters zugeklappt sein kann und für die Einspülposition des Einspülbehälters aufgeklappt sein muss. Die Haube ist hierbei dazu ausgebildet den Einspülbehälter in Transportposition zu verkleiden.

## Patentansprüche

1. Verfahren zur Steuerung der Flüssigkeitsbeförderung einer landwirtschaftlichen Feldspritze (1), wobei die Feldspritze zumindest einen Vorratsbehälter (14) für die auszubringende Spritzbrühe, zumindest eine Pumpe (13) zum Befüllen des Vorratsbehälters, einen Einspülbehälter (3) zum Dosieren eines Wirkstoffmittels in den Vorratsbehälter und eine Steuereinheit (18) umfasst, wobei der Einspülbehälter (3) zwischen einer heruntergeklappten Einspülposition und einer hochgeklappten Transportposition bewegbar gelagert ist, wobei zumindest ein dem Einspülbehälter zugeordneter erster Sensor (5) die Stellung des Einspülbehälters detektiert und an die Steuereinheit (18) übermittelt, so dass mittels eines Sensorsignals zumindest zwischen der heruntergeklappten Einspülposition und einer angehobenen Stellung, vorzugsweise der hochgeklappten Transportposition, unterschieden werden kann, wobei in Reaktion auf das Sensorsignal die Flüssigkeitsbeförderung gesteuert wird,
**dadurch gekennzeichnet, dass**
in Reaktion auf das Sensorsignal die Befüllung des Vorratsbehälters (14) der Feldspritze (1) gesteuert wird.

2. Verfahren nach Anspruch 1 umfassend zudem einen zweiten Sensor (19) zur Detektion des Füllstandes des Vorratsbehälters (14), **dadurch gekennzeichnet, dass** die Befüllung des Vorratsbehälters (14) in Reaktion auf das Signal des ersten Sensors (5) sowie das Füllstandssignal des zweiten Sensors (19) gesteuert wird.

3. Verfahren nach Anspruch 1 oder 2 umfassend zudem einen weiteren Behälter zur Aufbewahrung von Klarwasser (16), eine diesem zugeordnete zweite Pumpe (13) und vorzugsweise zumindest einen dritten Sensor (20) zur Detektion des Füllstandes des Klarwasserbehälters, **dadurch gekennzeichnet, dass** die Befüllung des Klarwasserbehälters (16) ebenfalls in Reaktion auf das Signal des ersten Sensors (5) sowie das Füllstandssignal des dritten Sensors (20) gesteuert wird.

4. Verfahren nach zumindest einem der Ansprüche 1 bis 3 umfassend zudem zumindest eine Reinigungsdüse (21), welche dem Einspülbehälter (3) zugeordnet ist, **dadurch gekennzeichnet, dass** mittels des Sensorsignals des ersten Sensors (5) automatisiert ein Reinigungsvorgang zur Reinigung des Einspülbehälters (3) durch die Steuereinheit (18) aktiviert wird, sobald nach dem Einspülen von Wirkstoffmitteln in den Vorratsbehälter (14) in der heruntergeklappten Position durch den Sensor (5) eine angehobene Stellung, vorzugsweise die hochgeklappte Transportposition, detektiert wird.

5. Verfahren nach zumindest einem der Ansprüche 1 bis 4, **dadurch gekennzeichnet, dass** bei Vorliegen eines Befüllvorganges des Vorratsbehälters (14) mit einer Flüssigkeit bis zu einem vorgewählten ersten Wert für den Füllstand eine Steuerfunktion aktiviert wird, welche den Befüllvorgang stoppt, sobald der Füllstand in dem Vorratsbehälter den ersten Wert erreicht hat.

6. Verfahren nach zumindest einem der Ansprüche 3 bis 5, **dadurch gekennzeichnet, dass** bei Vorliegen eines Befüllvorganges des Klarwasserbehälters (16) mit einer Flüssigkeit bis zu einem vorgewählten ersten Wert für den Füllstand eine Steuerfunktion aktiviert wird, welche den Befüllvorgang stoppt, sobald der Füllstand in dem Vorratsbehälter den ersten Wert erreicht hat.

7. Verfahren nach zumindest einem der Ansprüche 1 bis 6, **dadurch gekennzeichnet, dass** bei Vorliegen eines Befüllvorganges des Vorratsbehälters (14) und/oder Klarwasserbehälters (16) mit einer Flüssigkeit bis zu einem vorgewählten ersten Wert für den Füllstand eine Steuerfunktion aktiviert wird, sobald der zumindest eine erste Sensor eine heruntergeklappte Stellung des Einspülbehälters (3) detektiert, wobei die Steuerfunktion das weitere Befüllen des Vorratsbehälters mit Flüssigkeit verhindert, sobald der Füllstand in dem Vorratsbehälter einen zweiten zuvor festgelegten Wert erreicht hat, welcher niedriger ist, als der erste Wert des Füllstandes.

8. Verfahren nach Anspruch 7, **dadurch gekennzeichnet, dass** das weitere Befüllen des Vorratsbehälters (14) und/oder Klarwasserbehälters (16) bis zu dem ersten Wert für den Füllstand aktiviert wird, sobald der zumindest eine erste Sensor (5) eine angehobene Stellung, vorzugsweise die hochgeklappte Transportposition, detektiert.

9. Verfahren nach zumindest einem der Ansprüche 1 bis 8, **dadurch gekennzeichnet, dass** eine Bedien- und/oder Anzeigevorrichtung (23), vorzugsweise angebracht in einer Fahrerkabine, mit der Steuereinheit verbunden ist und dass in der Bedien- und/oder Anzeigevorrichtung und/oder der Steuervorrichtung (18) Daten für zumindest eine landwirtschaftliche Fläche hinterlegt sind, welche die Flächengröße und/oder den auszubringenden Wirkstoff und/oder die auszubringende Wirkstoffmenge und/oder die auszubringende Wirkstoffmengenkonzentration umfassen, und dass die zumindest eine Fläche mittels der Bedien- und/oder Anzeigevorrichtung (23) auswählbar ist und dass in Reaktion darauf die Flüssigkeitsbeförderung gesteuert wird.

10. Verfahren nach Anspruch 9, **dadurch gekennzeichnet, dass** zu der zumindest einen hinterlegten Fläche jeweils zusätzlich Positionsdaten hinterlegt sind und ein Positionsbestimmungssensor (25) mit der Steuereinheit und/oder der Bedien- und/oder Anzeigevorrichtung (23) verbunden ist und dass der aktuellen Position des Positionsbestimmungssensors (25) automatisch durch die Steuervorrichtung (18) oder die Bedien- und/oder Anzeigevorrichtung (23) die nächstliegende Fläche zugeordnet wird.

11. Verfahren nach Anspruch 9 oder 10, **dadurch gekennzeichnet, dass** der erste und der zweite Wert für den Füllstand des Vorratsbehälters und/oder des Klarwasserbehälters automatisch durch die Steuervorrichtung (18) und/oder die Bedien- und/oder Anzeigevorrichtung (23) an Hand der gespeicherten Daten ermittelt wird.

12. Verfahren nach zumindest einem der Ansprüche 9 bis 11, **dadurch gekennzeichnet, dass** die Quelle der für den Einspülvorgang notwendigen Trägerflüssigkeit, vorzugsweise der Vorratsbehälter (14) und/oder der Klarwasserbehälter (16), durch die Steuervorrichtung (18) und/oder die Bedien- und/oder Anzeigevorrichtung (23) an Hand der gespeicherten Daten ausgewählt wird.

13. Vorrichtung zur Steuerung der Flüssigkeitsbeförderung einer landwirtschaftlichen Feldspritze (1), wobei die Feldspritze zumindest einen Vorratsbehälter für die auszubringende Spritzbrühe, zumindest eine Pumpe zum Befüllen des Vorratsbehälters (14), einen Einspülbehälter (3) zum Dosieren eines Wirkstoffmittels in den Vorratsbehälter und eine Steuereinheit (18) umfasst, wobei der Einspülbehälter (3) zwischen einer heruntergeklappten Einspülposition und einer hochgeklappten Transportposition bewegbar gelagert ist, wobei zumindest ein dem Einspülbehälter zugeordneter erster Sensor (5) die Stellung des Einspülbehälters detektiert und an die Steuereinheit (18) übermittelt, so dass mittels eines Sensorsignals zumindest zwischen der heruntergeklappten Einspülposition und einer angehobenen Stellung, vorzugsweise der hochgeklappten Transportposition, unterschieden werden kann, wobei in Reaktion auf das Sensorsignal die Flüssigkeitsbeförderung gesteuert wird,
**dadurch gekennzeichnet, dass**
die Steuereinheit so konfiguriert ist, dass die Befüllung des Vorratsbehälters (14) der Feldsp̅ritze (1) in Reaktion auf das Sensorsignal gesteuert wird.

14. Vorrichtung nach Anspruch 13 umfassend zudem zumindest eine Reinigungsdüse (21), welche dem Einspülbehälter (3) zugeordnet ist, **dadurch gekennzeichnet, dass** mittels des Sensorsignals des ersten Sensors (5) automatisiert ein Reinigungsvorgang zur Reinigung des Einspülbehälters (3) durch die Steuereinheit (18) aktiviert wird, sobald nach dem Einspülen von Wirkstoffmitteln in den Vorratsbehälter (14) in der heruntergeklappten Position durch den Sensor (5) eine angehobene Stellung, vorzugsweise die hochgeklappte Transportposition, detektiert und an die Steuereinheit übermittelt wird.

15. Vorrichtung nach Anspruch 13 oder 14 umfassend zudem zumindest einen zweiten Sensor (19) zur Detektion des Füllstandes des Vorratsbehälters, **dadurch gekennzeichnet, dass** bei Vorliegen eines Befüllvorganges des Vorratsbehälters (14) mit einer Flüssigkeit bis zu einem vorgewählten und in der Steuereinheit (18) hinterlegten ersten Wert für den Füllstand eine Steuerfunktion der Steuereinheit (18) aktiviert wird, sobald der zumindest eine erste Sensor (5) eine heruntergeklappte Stellung des Einspülbehälters (3) detektiert und an die Steuereinheit übermittelt, wobei die Steuerfunktion das weitere Befüllen des Vorratsbehälters (14) mit Flüssigkeit, vorzugsweise durch Abschalten der Pumpe (13), verhindert, sobald der Füllstand in dem Vorratsbehälter (14) einen zweiten zuvor festgelegten und in der Steuereinheit (18) hinterlegten Wert erreicht hat, welcher niedriger ist, als der erste Wert des Füllstandes.

16. Vorrichtung nach zumindest einem der Ansprüche 13 bis 15, **dadurch gekennzeichnet, dass** die Feldspritze (1) über einen weiteren Behälter (16) zur Aufbewahrung von Klarwasser, eine diesem zugeordnete zweite Pumpe (13) und vorzugsweise zumindest einen dritten Sensor (20) zur Detektion des Füllstandes des Klarwasserbehälters (16) verfügt, wobei die Steuereinheit (18) das Befüllen des Klarwasserbehälters ebenfalls in Reaktion auf das Signal des ersten Sensors (5) sowie das Füllstandssignal des dritten Sensors (20) steuert.

17. Vorrichtung nach zumindest einem der Ansprüche 13 bis 16, **dadurch gekennzeichnet, dass** eine Bedien- und/oder Anzeigevorrichtung (23), vorzugsweise angebracht in einer Fahrerkabine, mit der Steuereinheit (18) verbunden ist und dass in der Bedien- und/oder Anzeigevorrichtung (23) und/oder der Steuereinheit (18) Daten für zumindest eine landwirtschaftliche Fläche hinterlegt sind, welche die Flächengröße und/oder den auszubringenden Wirkstoff und/oder die auszubringende Wirkstoffmenge und/oder die auszubringende Wirkstoffmengenkonzentration umfassen, und dass die zumindest eine Fläche mittels der Bedien- und/oder Anzeigevorrichtung (23) auswählbar ist und dass die Steuereinheit in Reaktion darauf die Flüssigkeitsbeförderung steuert.

18. Vorrichtung nach Anspruch 17, **dadurch gekennzeichnet, dass** zu der zumindest einen hinterlegten Fläche jeweils zusätzlich Positionsdaten in der Bedien- und/oder Anzeigevorrichtung (23) und/oder der Steuervorrichtung (18) hinterlegt sind und ein Positionsbestimmungssensor (25) mit der Steuereinheit (18) und/oder der Bedien- und/oder Anzeigevorrichtung (23) verbunden ist und dass der aktuellen Position des Positionsbestimmungssensors (25) automatisch durch die Steuervorrichtung (18) oder die Bedien- und/oder Anzeigevorrichtung (23) die nächstliegende Fläche zugeordnet wird.

## Claims

1. Method for controlling the conveying of fluid to an agricultural field sprayer (1), wherein the field sprayer comprises at least one reservoir container (14) for the spray fluid to be discharged, at least one pump (13) for filling the reservoir container, one induction container (3) for metering an active agent into the reservoir container and one control unit (18), wherein the induction container (3) is mounted so as to be movable between a folded-down induction position and a folded-up transportation position, wherein at least one first sensor (5) which is assigned to the induction container detects the position of the induction container and communicates it to the control unit (18), with the result that by means of a sensor signal it is possible to differentiate between the folded-down induction position and a raised position, preferably the folded-up transportation position, wherein the conveying of fluid is controlled in reaction to the sensor signal,
**characterized in that**
the filling of the reservoir container (14) of the field sprayer (1) is controlled in reaction to the sensor signal.

2. Method according to Claim 1, additionally comprising a second sensor (19) for detecting the filling level of the reservoir container (14), **characterized in that** the filling of the reservoir container (14) is controlled in reaction to the signal of the first sensor (5) and the filling level signal of the second sensor (19).

3. Method according to Claim 1 or 2, additionally comprising a further container for storing clear water (16), a second pump (13) assigned thereto and preferably at least one third sensor (20) for detecting the filling level of the clear water container, **characterized in that** the filling of the clear water container (16) is also controlled in reaction to the signal of the first sensor (5) and the filling level signal of the third sensor (20).

4. Method according to at least one of Claims 1 to 3, additionally comprising at least one cleaning nozzle (21) which is assigned to the induction container (3), **characterized in that** a cleaning process for cleaning the induction container (3) is activated by the control unit (18) in an automated fashion by means of the sensor signal of the first sensor (5), as soon as a raised position, preferably the folded-up transportation position, is detected by the sensor (5) after the induction of active agents into the reservoir container (14) in the folded-down position.

5. Method according to at least one of Claims 1 to 4, **characterized in that** when a filling process of the reservoir container (14) with a fluid occurs up to a preselected first value for the filling level, a control function is activated which stops the filling process as soon as the filling level in the reservoir container has reached the first value.

6. Method according to at least one of Claims 3 to 5, **characterized in that** when a filling process of the clear water container (16) occurs with a fluid up to a preselected first value for the filling level, a control function is activated which stops the filling process as soon as the filling level in the reservoir container has reached the first value.

7. Method according to at least one of Claims 1 to 6, **characterized in that** when a filling process of the reservoir container (14) and/or of the clear water container (16) with a fluid occurs up to a preselected first value for the filling level, a control function is activated as soon as the at least one first sensor detects a folded-down position of the induction container (3), wherein the control function prevents the further filling of the reservoir container with fluid as soon as the filling level in the reservoir container has reached a second, pre-defined value which is lower than the first value of the filling level.

8. Method according to Claim 7, **characterized in that** the further filling of the reservoir container (14) and/or of the clear water container (16) up to the first value for the filling level is activated as soon as the at least one first sensor (5) has detected a raised position, preferably the folded-up transportation position.

9. Method according to at least one of Claims 1 to 8, **characterized in that** an operator control and/or display device (23), preferably mounted in a driver's cab, is connected to the control unit, and **in that** data for at least one agricultural area is stored in the operator control and/or display device and/or the control device (18), which data comprises the size of the area and/or the active agent which is to be discharged and/or the quantity of active agent which is to be discharged and/or the concentration of the quantity of active agent which is to be discharged, and **in that** the at least one area can be selected by means of the operator control and/or display device (23), and **in that** the conveying of fluid is controlled in reaction thereto.

10. Method according to Claim 9, **characterized in that** position data relating to the at least one stored area is respectively additionally stored, and a position-determining sensor (25) is connected to the control unit and/or the operator control and/or display device (23), and **in that** the current position of the position-determining sensor (25) is automatically assigned the closest area by the control device (18) or the operator control and/or display device (23).

11. Method according to Claim 9 or 10, **characterized in that** the first and second values for the filling level of the reservoir container and/or of the clear water container are automatically determined by the control device (18) and/or the operator control and/or display device (23) on the basis of the stored data.

12. Method according to at least one of Claims 9 to 11, **characterized in that** the source of the carrier fluid necessary for the induction process, preferably the reservoir container (14) and/or the clear water container (16), is selected by the control device (18) and/or the operator control and/or display device (23) on the basis of the stored data.

13. Device for controlling the conveying of fluid to an agricultural field sprayer (1), wherein the field sprayer comprises at least one reservoir container for the spray fluid to be discharged, at least one pump for filling the reservoir container (14), one induction container (3) for metering an active agent into the reservoir container and one control unit (18), wherein the induction container (3) is mounted so as to be movable between a folded-down induction position and a folded-up transportation position, wherein at least one first sensor (5) which is assigned to the induction container detects the position of the induction container and communicates it to the control unit (18), with the result that by means of a sensor signal it is possible to differentiate between the folded-down induction position and a raised position, preferably the folded-up transportation position, wherein the conveying of fluid is controlled in reaction to the sensor signal,
**characterized in that**
the control unit is configured in such a way that the filling of the reservoir container (14) of the field sprayer (1) is controlled in reaction to the sensor signal.

14. Device according to Claim 13, additionally comprising at least one cleaning nozzle (21) which is assigned to the induction container (3), **characterized in that** a cleaning process for cleaning the induction container (3) is activated by the control unit (18) by means of the sensor signal of the first sensor (5) as soon as a raised position, preferably the folded-up transportation position, is detected by the sensor (5) after the induction of active agents into the reservoir container (14) in the folded-down position, and communicated to the control unit.

15. Device according to Claim 13 or 14, additionally comprising at least one second sensor (19) for detecting the filling level of the reservoir container, **characterized in that** when a filling process of the reservoir container (14) occurs with a fluid up to a preselected first value which is stored in the control unit (18), for the filling level, a control function of the control unit (18) is activated as soon as the at least one first sensor (5) detects a folded-down position of the induction container (3) and communicates it to the control unit, wherein the control function prevents the further filling of the reservoir container (14) with fluid, preferably by switching off the pump (13) as soon as the filling level in the reservoir container (14) has reached a second previously defined value which is stored in the control unit (18) and which is lower than the first value of the filling level.

16. Device according to at least one of Claims 13 to 15, **characterized in that** the field sprayer (1) has a further container (16) for storing clear water, a second pump (13) which is assigned thereto, and preferably at least one third sensor (20) for detecting the filling level of the clear water container (16), wherein the control unit (18) also controls the filling of the clear water container in reaction to the signal of the first sensor (5), and in reaction to the filling level signal of the third sensor (20).

17. Device according to at least one of Claims 13 to 16, **characterized in that** an operator control and/or display device (23), preferably mounted in a driver's cab, is connected to the control unit (18) and **in that** data for at least one agricultural area is stored in the operator control and/or display device (23) and/or the control unit (18), which data comprises the size of the area and/or the active agent to be discharged and/or the quantity of active agent to be discharged and/or the concentration of the quantity of active agent to be discharged, and **in that** the at least one area can be selected by means of the operator control and/or display device (23), and **in that** the control unit controls the conveying of the fluid in reaction thereto.

18. Device according to Claim 17, **characterized in that** position data relating to the at least one stored area is respectively additionally stored in the operator control and/or display device (23) and/or the control device (18), and a position-determining sensor (25) is connected to the control unit (18) and/or the operator control and/or display device (23), and **in that** the current position of the position-determining sensor (25) is automatically assigned the closest area by the control device (18) or the operator control and/or display device (23).

## Revendications

1. Procédé de commande du transport de liquide d'une rampe de pulvérisation des cultures (1) agricole, la rampe de pulvérisation des cultures comportant au moins un réservoir (14) pour la bouillie de pulvérisation à épandre, au moins une pompe (13) destinée à remplir le réservoir, un bac d'incorporation (3) servant au dosage d'un agent actif dans le réservoir et une unité de commande (18), le bac d'incorporation (3) étant monté mobile entre une position d'incorporation rabattue vers le bas et une position de transport rabattue vers le haut, au moins un premier capteur (5) associé au bac d'incorporation détectant la position du bac d'incorporation et la communiquant à l'unité de commande (18), de sorte qu'il soit possible de faire la différence, au moyen d'un signal de capteur, entre au moins la position d'incorporation rabattue vers le bas et une position relevée, de préférence la position de transport rabattue vers le haut, le transport de liquide étant commandé en réaction au signal de capteur,
**caractérisé en ce que**
le remplissage du réservoir (14) de la rampe de pulvérisation des cultures (1) est commandé en réaction au signal de capteur.

2. Procédé selon la revendication 1, comprenant en outre un deuxième capteur (19) destiné à détecter le niveau de remplissage du réservoir (14), **caractérisé en ce que** le remplissage du réservoir (14) est commandé en réaction au signal du premier capteur (5) ainsi qu'au signal de niveau de remplissage du deuxième capteur (19).

3. Procédé selon la revendication 1 ou 2, comprenant en outre un récipient supplémentaire destiné à conserver de l'eau claire (16), une deuxième pompe (13) associée à celui-ci et de préférence au moins un troisième capteur (20) destiné à détecter le niveau de remplissage du récipient à eau claire, **caractérisé en ce que** le remplissage du récipient à eau claire (16) est également commandé en réaction au signal du premier capteur (5) ainsi qu'au signal de niveau de remplissage du troisième capteur (20).

4. Procédé selon au moins l'une des revendications 1 à 3, comprenant en outre au moins une buse de nettoyage (21), laquelle est associée au bac d'incorporation (3), **caractérisé en ce qu'**une opération de nettoyage destinée au nettoyage du bac d'incorporation (3) est activée de manière automatisée par l'unité de commande (18) au moyen du signal de capteur du premier capteur (5) dès qu'une position relevée, de préférence la position de transport rabattue vers le haut, est détectée par le capteur (5) après l'incorporation d'agents actifs dans le réservoir (14) dans la position rabattue vers le bas.

5. Procédé selon au moins l'une des revendications 1 à 4, **caractérisé en ce qu'**en présence d'une opération de remplissage du réservoir (14) avec un liquide jusqu'à une première valeur présélectionnée pour le niveau de remplissage, une fonction de commande est activée, laquelle stoppe l'opération de remplissage dès que le niveau de remplissage dans le réservoir a atteint la première valeur.

6. Procédé selon au moins l'une des revendications 3 à 5, **caractérisé en ce qu'**en présence d'une opération de remplissage du récipient à eau claire (16) avec un liquide jusqu'à une première valeur présélectionnée pour le niveau de remplissage, une fonction de commande est activée, laquelle stoppe l'opération de remplissage dès que le niveau de remplissage dans le réservoir a atteint la première valeur.

7. Procédé selon au moins l'une des revendications 1 à 6, **caractérisé en ce qu'**en présence d'une opération de remplissage du réservoir (14) et/ou du récipient à eau claire (16) avec un liquide jusqu'à une première valeur présélectionnée pour le niveau de remplissage, une fonction de commande est activée dès que l'au moins un premier capteur détecte une position rabattue vers le bas du bac d'incorporation (3), la fonction de commande empêchant la poursuite du remplissage du réservoir avec du liquide dès que le niveau de remplissage dans le réservoir a atteint une deuxième valeur préalablement définie, laquelle est inférieure à la première valeur du niveau de remplissage.

8. Procédé selon la revendication 7, **caractérisé en ce que** la poursuite du remplissage du réservoir (14) et/ou du récipient à eau claire (16) est activée jusqu'à la première valeur du niveau de remplissage dès que l'au moins un premier capteur (5) détecte une position relevée, de préférence la position de transport rabattue vers le haut.

9. Procédé selon au moins l'une des revendications 1 à 8, **caractérisé en ce qu'**un dispositif de conduite et/ou d'affichage (23), de préférence installé dans une cabine de conducteur, est relié à l'unité de commande et **en ce que** des données pour au moins une surface agricole sont stockées dans le dispositif de conduite et/ou d'affichage et/ou dans le dispositif de commande (18), lesquelles comprennent l'aire de la surface et/ou l'agent actif à épandre et/ou la quantité d'agent actif à épandre et/ou la concentration quantitative d'agent actif à épandre, et **en ce que** l'au moins une surface peut être sélectionnée au moyen du dispositif de conduite et/ou d'affichage (23) et **en ce que** le transport de liquide est commandé en réaction à cela.

10. Procédé selon la revendication 9, **caractérisé en ce que** des données de position sont respectivement stockées en plus de l'au moins une surface stockée et un capteur de détermination de position (25) est relié à l'unité de commande et/ou au dispositif de conduite et/ou d'affichage (23) et **en ce que** la position actuelle du capteur de détermination de position (25) est associée automatiquement à la surface la plus proche par le dispositif de commande (18) et/ou le dispositif de conduite et/ou d'affichage (23).

11. Procédé selon la revendication 9 ou 10, **caractérisé en ce que** la première et la deuxième valeur pour le niveau de remplissage du réservoir et/ou du récipient à eau claire est identifiée automatiquement par le dispositif de commande (18) et/ou le dispositif de conduite et/ou d'affichage (23) à l'aide des données mémorisées.

12. Procédé selon l'une des revendications 9 à 11, **caractérisé en ce que** la source du liquide porteur nécessaire pour l'opération d'incorporation, de préférence le réservoir (14) et/ou le récipient à eau claire (16), est sélectionnée par le dispositif de commande (18) et/ou le dispositif de conduite et/ou d'affichage (23) à l'aide des données mémorisées.

13. Dispositif de commande du transport de liquide d'une rampe de pulvérisation des cultures (1) agricole, la rampe de pulvérisation des cultures comportant au moins un réservoir pour la bouillie de pulvérisation à épandre, au moins une pompe destinée à remplir le réservoir (14), un bac d'incorporation (3) servant au dosage d'un agent actif dans le réservoir et une unité de commande (18), le bac d'incorporation (3) étant monté mobile entre une position d'incorporation rabattue vers le bas et une position de transport rabattue vers le haut, au moins un premier capteur (5) associé au bac d'incorporation détectant la position du bac d'incorporation et la communiquant à l'unité de commande (18), de sorte qu'il soit possible de faire la différence, au moyen d'un signal de capteur, entre au moins la position d'incorporation rabattue vers le bas et une position relevée, de préférence la position de transport rabattue vers le haut, le transport de liquide étant commandé en réaction au signal de capteur,
**caractérisé en ce que**
l'unité de commande est configurée de telle sorte que le remplissage du réservoir (14) de la rampe de pulvérisation des cultures (1) est commandé en réaction au signal de capteur.

14. Dispositif selon la revendication 13, comprenant en outre au moins une buse de nettoyage (21), laquelle est associée au bac d'incorporation (3), **caractérisé en ce qu'**une opération de nettoyage destinée au nettoyage du bac d'incorporation (3) est activée de manière automatisée par l'unité de commande (18) au moyen du signal de capteur du premier capteur (5) dès qu'une position relevée, de préférence la position de transport rabattue vers le haut, est détectée par le capteur (5) après l'incorporation d'agents actifs dans le réservoir (14) dans la position rabattue vers le bas puis communiquée à l'unité de commande.

15. Dispositif selon la revendication 13 ou 14, comprenant en outre au moins un deuxième capteur (19) destiné à détecter le niveau de remplissage du réservoir (14), **caractérisé en ce qu'**en présence d'une opération de remplissage du réservoir (14) avec un liquide jusqu'à une première valeur présélectionnée pour le niveau de remplissage et stockée dans l'unité de commande (18), une fonction de commande de l'unité de commande (18) est activée dès que l'au moins un premier capteur (5) détecte une position rabattue vers le bas du bac d'incorporation (3) et la communique à l'unité de commande, la fonction de commande empêchant la poursuite du remplissage du réservoir (14) avec du liquide, de préférence par une mise hors circuit de la pompe (13), dès que le niveau de remplissage dans le réservoir (14) a atteint une deuxième valeur préalablement définie et stockée dans l'unité de commande (18), laquelle est inférieure à la première valeur du niveau de remplissage.

16. Dispositif selon au moins l'une des revendications 13 à 15, **caractérisé en ce que** la rampe de pulvérisation des cultures (1) dispose d'un récipient supplémentaire (16) destiné à conserver de l'eau claire (16), une deuxième pompe (13) associée à celui-ci et de préférence au moins un troisième capteur (20) destiné à détecter le niveau de remplissage du récipient à eau claire (16), l'unité de commande (18) commandant le remplissage du récipient à eau claire également en réaction au signal du premier capteur (5) ainsi qu'au signal de niveau de remplissage du troisième capteur (20).

17. Dispositif selon au moins l'une des revendications 13 à 16, **caractérisé en ce qu'**un dispositif de conduite et/ou d'affichage (23), de préférence installé dans une cabine de conducteur, est relié à l'unité de commande (18) et **en ce que** des données pour au moins une surface agricole sont stockées dans le dispositif de conduite et/ou d'affichage (23) et/ou dans l'unité de de commande (18), lesquelles comprennent l'aire de la surface et/ou l'agent actif à épandre et/ou la quantité d'agent actif à épandre et/ou la concentration quantitative d'agent actif à épandre, et **en ce que** l'au moins une surface peut être sélectionnée au moyen du dispositif de conduite et/ou d'affichage (23) et **en ce que** l'unité de commande commande le transport de liquide en réaction à cela.

18. Dispositif selon la revendication 17, **caractérisé en ce que** des données de position sont respectivement stockées en plus de l'au moins une surface stockée dans le dispositif de conduite et/ou d'affichage (23) et/ou dans le dispositif de commande (18) et un capteur de détermination de position (25) est relié à l'unité de commande (18) et/ou au dispositif de conduite et/ou d'affichage (23) et **en ce que** la position actuelle du capteur de détermination de position (25) est associée automatiquement à la surface la plus proche par le dispositif de commande (18) et/ou le dispositif de conduite et/ou d'affichage (23).
